# EUROPÄISCHE PATENTSCHRIFT

(11) **EP 0 848 855 B1**
(45) Veröffentlichungstag und Bekanntmachung des Hinweises auf die Patenterteilung: **03.04.2002**
(21) Anmeldenummer: 97921685.0
(22) Anmeldetag: 22.04.1997
(51) Int. Cl.: H01M 2/16, C08J 7/14

(54) **VERFAHREN ZUR BEHANDLUNG VON MIT KIESELSÄUREEINLAGERUNGEN VERSEHENEN ELASTISCHEN MATERIALIEN**
METHOD OF TREATING RESILIENT MATERIALS PROVIDED WITH SILICIC ACID INTERCALATIONS
PROCEDE POUR TRAITER DES MATERIAUX ELASTIQUES MUNIS DE D'INCLUSIONS D'ACIDE SILICIQUE

(30) Priorität: 09.07.1996 DE 19627615
(43) Veröffentlichungstag der Anmeldung: 24.06.1998
(73) Patentinhaber: Accumulatorenwerke Hoppecke Carl Zoellner & Sohn GmbH & Co. KG, 59929 Brilon (DE)
(72) Erfinder: NITSCHE, Werner, D-58559 Lippstadt (DE); LAHME, Norbert, D-59929 Brilon (DE); SASSMANNSHAUSEN, Günter, D-59929 Brilon (DE)
(74) Vertreter: Stenger, Watzke & Ring Patentanwälte
(86) Internationale Anmeldenummer: EP9702017
(87) Internationale Veröffentlichungsnummer: WO9801911

(56) Entgegenhaltungen:
- WO-A-91/16733
- DE-A- 2 629 236
- DATABASE WPI Section Ch, Week 9305 Derwent Publications Ltd., London, GB; Class A17, AN 93-042877 XP002038427 & KR 9 203 293 B (DONG YANG NYLON CO) , 27.April 1992

## Beschreibung

Die Erfindung betrifft ein Verfahren zur Behandlung von mit Kieselsäureeinlagerungen versehenen elastischen Materialien.

Es ist im Stand der Technik im Bereich vieler technischer Anwendungen bekannt, elastische Materialien, beispielsweise Kunststoffe, insbesondere Polyethylen (PE) oder Polyvinylchlorid (PVC) sowie Gummi, Latex oder dergleichen bei der Herstellung mit Kieselsäureeinlagerungen zu versehen. Bei Kunststoffverarbeitungen geschieht dies beispielsweise während des Strangpressvorgangs oder auch beim Extrudieren. Die Kieselsäureeinlagerungen übernehmen bei den späteren technischen Anwendungen technische Funktionen.

Ein Anwendungsfall der allgemeinen und an sich bekannten Art ist beispielsweise die Herstellung von Separatoren für Bleiplatten in der Akkumulatporenproduktion. Diese Separatoren sind beispielsweise stranggepreßte oder extrudierte PE-Folien, welche beispielsweise Stege und in allen Bereichen Kieselsäureeinlagerungen als Porenbildner aufweisen. Aus derartigen Folien werden Zwischenlagen oder Taschen für die Bleiplatten eines Zellenblockes eines Akkumulators hergestellt.

Bei den technischen Anwendungen der mit Kieselsäureeinlagerungen versehenen elastischen Materialien kommt es häufig zu Handhabungen des Materials in Bereichen unterschiedlicher Feuchtigkeit und unterschiedlicher Temperaturen. Damit unterliegen die elastischen Materialien mit den Kieselsäureeinlagerungen einerseits Vorgängen, in denen sie Feuchtigkeit aufnehmen, andererseits Vorgängen, in denen sie getrocknet werden. Dies führt zu einem unerwünschten Schrumpfen während des Trocknungsvorganges.

Die DE 26 29 226 offenbart ein Verfahren zur Herstellung eines flexiblen, mikroporösen Batteriescheiders, der sich aus einem thermoplastischen Harzbinder, einem Weichmacher, einem anorganischen Füllstoffmaterial, einem Lösungsmittel sowie einem Nicht-Lösungsmittel in unterschiedlichen, bestimmten Konzentrationen zusammensetzt. Als Weichmacher wird dabei ein monomerer Weichmacher aus beispielsweise der Gruppe der Dioktyoktalate vorgeschlagen. Desweiteren wird mit der Erfindung vorgeschlagen, als anorganisches Füllmaterial eine gefällte hydraktivierte Kieselsäure zu verwenden.

Ausgehend von diesem Stand der Technik liegt der vorliegenden Erfindung die **Aufgabe** zugrunde, ein Verfahren zur Behandlung von mit Kieselsäureeinlagerungen versehenen elastischen Materialien anzugeben, welches die Minimierung oder die Vermeidung von Schrumpfvorgängen ermöglicht.

Zur technischen **Lösung** dieser Aufgabe wird das Verfahren gemäß Anspruch 1 vorgeschlagen.

In überraschender Weise hat sich gezeigt, daß eine derartige Temperaturbehandlung späteren Schrumpfvorgängen infolge von Trocknung des Materials vorbeugen kann.

Mit Vorteil wird vorgeschlagen, daß das Material die vorgegebene Zeitdauer Temperaturen um 100°C ausgesetzt wird. Dieser Temperaturbereich hat sich als besonders effektiv herausgestellt.

Als vorgegebene Zeitdauer hat sich ein Zeitbereich von 24 h bis 48 h als erforderlich erwiesen.

Mit besonderem Vorteil wird das mit den Kieselsäureeinlagerungen versehene elastische Material in Form von Folienrollen die vorgegebene Zeitdauer der entsprechenden Temperatur ausgesetzt. Dieser Verfahrensvorschlag ermöglicht die einfache Integration des Behandlungsverfahrens in die an sich bekannten Produktions- und Bearbeitungsvorgänge. Üblicherweise werden zunächst die Kunststoffmaterialien, beispielsweise PE, hergestellt und im Strangpreßverfahren ausgebracht. In diesem Verfahrensschritt werden üblicherweise die Kieselsäureeinlagerungen hergestellt. Der fertige Strang kann dann aufgerollt und in Folienrollenform der Behandlungstemperatur ausgesetzt oder zunächst ausgeliefert werden, um dann vor dem direkten Einsatz der vorgegebenen Zeitdauer der gewünschten Temperatur ausgesetzt zu werden.

Mit besonderem Vorteil wird vorgeschlagen, daß das mit Kieselsäureeinlagerungen versehene Material während der Temperaturbehandlung mit einer Luftfeuchtigkeit von 40 % bis 100 % behandelt wird. Dies kann in einer Dampfumgebung erfolgen. Gemäß einem vorteilhaften alternativen Vorschlag der Erfindung kann dies durch Tränken erfolgen. Besonders vorteilhaft ist ein Tränken des Materials in Säuren, wozu sich beispielsweise Schwefelsäure, Phosphorsäure oder Sulfonsäuren als besonders geeignet herausgestellt haben.

Mit der Erfindung wird ein einfaches aber wirkungsvolles Verfahren zur Behandlung von mit Kieselsäureeinlagerungen versehenen elastischen Materialien vorgeschlagen, welches späteren Schrumpfvorgängen entgegenwirkt.

Weiterhin wird mit der Erfindung eine Folie aus elastischem Material mit Kieselsäureeinlagerungen vorgeschlagen, welche nach ihrer Fertigstellung nach dem erfindungsgemäßen Verfahren behandelt wird, also eine vorgegebene Zeitdauer Temperaturen oberhalb 40°C und gegebenenfalls zusätzlich einer Luftfeuchtigkeit von oberhalb 40 % ausgesetzt wird.

Die Folie ist in vorteilhafter Weise aus einem Kunststoff, mit besonderem Vorteil aus PE gebildet, alternativ auch aus Gummi oder Latex.

Das Behandlungsverfahren kann nach Herstellung der Folie vor der Auslieferung beim Hersteller oder nach der Einlieferung beim Empfänger erfolgen, beispielsweise auch kurz vor einem entsprechenden Weiterverarbeitungsvorgang.

Weitere Vorteile und Merkmale der Erfindung ergeben sich aus der folgenden Beschreibung anhand der Figuren. Dabei zeigen:

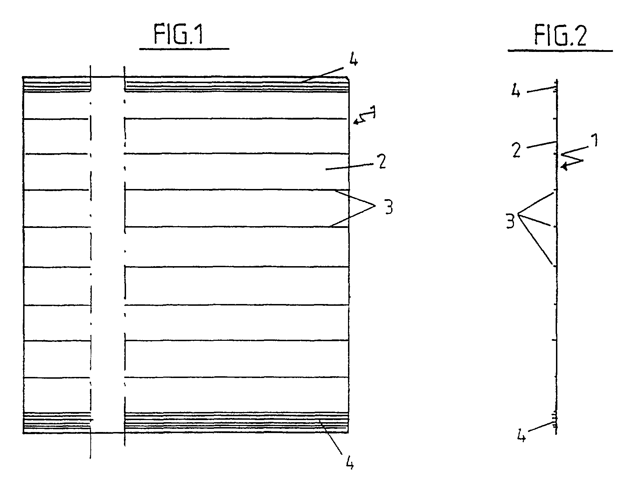

- Figur 1: eine schematische Draufsicht auf ein Ausführungsbeispiel für eine Folie und
- Figur 2: eine schematische Seitenansicht.

In den Figuren ist ein Ausführungsbeispiel für eine Folie aus elastischem Material gezeigt, wobei es sich um eine in Spulen zur Verfügung gestellte PE-Folie 1 handelt, deren flächiger Bereich 2 durch in Längsrichtung verlaufende stegartige Erhebungen strukturiert ist. Es werden von dieser streifenartig vorliegenden Folie jeweils vorgegebene Länge abgelenkt und nach Umfalten im Randbereich 4 miteinander verbunden. Der gesamte Flächenbereich 2 der Folie ist mit Kieselsäureeinlagerungen versehen.

### Bezugszeichenliste:

- 1: PE-Folienstreifen
- 2: Flächenbereich
- 3: Erhebungen
- 4: Randbereich

## Patentansprüche

1. Verfahren zur Behandlung von mit Kieselsäureeinlagerungen versehenen, elastischen Materialien zum Einsatz als Separator in Bleiakkumulatoren, wobei das fertiggestellte und mit den Kieselsäureeinlagerungen versehene Material vor bzw. während der Weiterverarbeitung im Rahmen der Akkumulatorenherstellung eine vorgegebene Zeitdauer von 24 h bis 48 h Temperaturen oberhalb 40°C ausgesetzt wird.

2. Verfahren nach Anspruch 1, **dadurch gekennzeichnet, daß** das Material die vorgegebene Zeitdauer Temperaturen um 100°C ausgesetzt wird.

3. Verfahren nach einem der vorhergehenden Ansprüche, **dadurch gekennzeichnet, daß** das elastische Material in Form von Folienrollen die vorgegebene Zeitdauer den Temperaturen ausgesetzt wird.

4. Verfahren nach einem der vorhergehenden Ansprüche, **dadurch gekennzeichnet, daß** das elastische Material eine vorgegebene Zeitdauer von 8 h bis 24 h Feuchtigkeit ausgesetzt wird.

5. Verfahren nach Anspruch 4, **dadurch gekennzeichnet, daß** die Feuchtigkeit in Form von Dampf zugeführt wird.

6. Verfahren nach einem der vorhergehenden Ansprüche, **dadurch gekennzeichnet, daß** das elastische Material mit Säure behandelt wird.

7. Verfahren nach einem der vorhergehenden Ansprüche, **dadurch gekennzeichnet, daß** eine aus Gummi gebildete Folie verwendet wird.

8. Verfahren nach einem der Ansprüche 1 bis 6, **dadurch gekennzeichnet, daß** eine aus Kunststoff gebildete Folie verwendet wird.

9. Verfahren nach Anspruch 8, **dadurch gekennzeichnet, daß** der Kunststoff Polyethylen (PE) ist.

## Claims

1. Method for treating elastic materials which are provided with inclusions of silica for use as a separator in lead storage batteries, the finished material which has been provided with the silica inclusions being exposed to temperatures of over 40°C for a predetermined time of 24 h to 48 h before or during the further processing as part of the production of the batteries.

2. Method according to Claim 1, **characterized in that** the material is exposed to temperatures of around 100°C for the predetermined time.

3. Method according to one of the preceding claims, **characterized in that** the elastic material is exposed to the temperatures for the predetermined time in the form of rolls of film.

4. Method according to one of the preceding claims, **characterized in that** the elastic material is exposed to moisture for a predetermined time of 8 h to 24 h.

5. Method according to Claim 4, **characterized in that** the moisture is supplied in the form of steam.

6. Method according to one of the preceding claims, **characterized in that** the elastic material is treated with acid.

7. Method according to one of the preceding claims, **characterized in that** a film which is formed from rubber is used.

8. Method according to one of Claims 1 to 6, **characterized in that** a film which is formed from plastic is used.

9. Method according to Claim 8, **characterized in that** the plastic is polyethylene (PE).

## Revendications

1. Procédé pour le traitement de matières élastiques munies de dépôts d'acide silicique, en vue d'une mise en oeuvre en tant que séparateurs dans des accumulateurs au plomb, dans lequel le matière préparée et munie de dépôts d'acide silicique est exposée pendant une durée prescrite de 24 h à 48 h à des températures au-dessus de 40°C, avant ou pendant la transformation ultérieure dans le cadre de la fabrication d'accumulateurs.

2. Procédé selon la revendication 1, **caractérisé en ce que** la matière est exposée à des températures aux alentours de 100°C pendant la durée prescrite.

3. Procédé selon l'une quelconque des revendications précédentes, **caractérisé en ce que** la matière élastique sous forme de rouleaux de feuilles est exposée aux températures, pendant la durée prescrite.

4. Procédé selon l'une quelconque des revendications précédentes, **caractérisé en ce que** la matière élastique est exposée à l'humidité pendant une durée prescrite de 8 h à 24 h.

5. Procédé selon la revendication 4, **caractérisé en ce que** l'humidité est introduite sous forme de vapeur d'eau.

6. Procédé selon l'une quelconque des revendications précédentes, **caractérisé en ce que** la matière élastique est traitée par un acide.

7. Procédé selon l'une quelconque des revendications précédentes, **caractérisé en ce qu'**une feuille constituée de caoutchouc est employée.

8. Procédé selon l'une quelconque des revendications 1 à 6, **caractérisé en ce qu'**une feuille constituée de matière plastique est employée.

9. Procédé selon la revendication 8, **caractérisé en ce que** la matière plastique est le polyéthylène (PE).
